Europäisches Patentamt

European Patent Office

Office européen des brevets

(19)

(11) Veröffentlichungsnummer: **0 317 730**
**B1**

(12) ## EUROPÄISCHE PATENTSCHRIFT

(45) Veröffentlichungstag der Patentschrift:
**07.11.90**

(51) Int. Cl.⁵: **B60J 7/05**

(21) Anmeldenummer: **88115679.8**

(22) Anmeldetag: **23.09.88**

(54) Schiebehebedach für Fahrzeuge.

(30) Priorität: **26.11.87 DE 3740129**

(43) Veröffentlichungstag der Anmeldung:
**31.05.89 Patentblatt 89/22**

(45) Bekanntmachung des Hinweises auf die Patenterteilung:
**07.11.90 Patentblatt 90/45**

(84) Benannte Vertragsstaaten:
**DE FR GB NL SE**

(56) Entgegenhaltungen:
**DE-A- 3 100 743**
**DE-A- 3 706 917**
**GB-A- 2 167 356**

(73) Patentinhaber: **Webasto AG Fahrzeugtechnik,
Kraillingerstrasse 5, D-8035 Stockdorf(DE)**

(72) Erfinder: **Kohlpaintner, Georg, Röntgenstrasse 31,
D-8033 Martinsried(DE)**
Erfinder: **Bienert, Horst, Max Klingerstrasse 15,
D-8035 Gauting(DE)**

## Beschreibung

Die Erfindung bezieht sich auf ein Schiebehebedach für Fahrzeuge mit einem in seiner Schließstellung eine Dachöffnung in einer festen Dachfläche verschließenden, starren Deckel, der an parallel zu den Seitenkanten der Dachöffnung verlaufenden Gleitbahnen geführt und wahlweise mit seinem hinteren Ende über die feste Dachfläche ausstellbar oder nach Absenken seines hinteren Endes nach hinten unter die feste Dachfläche verschiebbar ist, und mit einer die Verschiebewegungen des Deckels mitmachenden Wasserrinne, die bei ausgestelltem und geschlossenem Deckel die hintere Kante der Dachöffnung untergreift und die mit einer Kippeinrichtung verbunden ist, die beim Ausstellen des Deckels die Wasserrinne in eine Schräglage bringt, in welcher der vordere Rand der Wasserrinne angehoben ist, wobei die Kippeinrichtung zu beiden Seiten der Dachöffnung angeordnete Schleppbügel aufweist, die im Bereich ihres hinteren Endes mit der Wasserrinne starr verbunden und im Bereich ihres vorderen Endes an einem deckelfesten Punkt angelenkt sind, welcher dem hinteren Ende des Deckels näher liegt als dem vorderen Deckelende.

Bei einem bekannten Schiebehebedach dieser Art (GB-A 2 167 356) ist die Wasserrinne über Nokken, die mit der Wasserrinne fest verbunden und unterhalb des hinteren Teils der Wasserrinne angeordnet sind, auf mit Auflaufschrägen versehenen Nockenbahnen abgestützt, wobei die Nocken zugleich Schwenklager für die Kippbewegung der Wasserrinne beim Ausstellen des Deckels bilden. Das Verstellen des Deckels erfolgt über eine Transportbrücke , die sich beim Ausstellen des Deckels unter die Wasserrinne schiebt. Die mit Auflaufschrägen versehenen Nockenbahnen bedingen eine gewisse Vergrößerung der Bauhöhe des Schiebehebedaches und damit eine Verminderung der Kopffreiheit. Die Montage eines Dachhimmels, wie er beispielsweise aus der DE-A 3 532 083 bekannt ist, ist relativ schwierig, weil dabei die Transportbrücke im Weg ist.

Der im Anspruch 1 angegebenen Erfindung liegt die Aufgabe zugrunde, ein Schiebehebedach der eingangs genannten Art dahingehend weiterzubilden, daß eine besonders flache Bauweise möglich wird und der Dachhimmel besonders bequem montiert werden kann.

Diese Aufgabe wird erfindungsgemäß dadurch gelöst, daß die Wasserrinne beidseits an je einem Führungsschlitten angelenkt ist, daß die Führungsschlitten gleichfalls entlang den Gleitbahnen verschiebbar geführt sind und für die Wasserrinne eine Schwenkachse bestimmen, die in Abstand hinter der Wasserrinne liegt und die gegenüber den Gleitbahnen eine fest vorgegebene, in Abstand über den Gleitbahnen liegende Höhenlage hat, sowie daß die Lage der Wasserrinnenschwenkachse und der Anlenkstellen der Schleppbügel an dem deckelfesten Punkt derart gewählt sind, daß bei der Dachmontage ein mit dem Deckel zu verbindender Dachhimmel von hinten unter der Wasserrinne hindurchgeschoben werden kann.

Das erfindungsgemäße Schiebehebedach läßt sich besonders flach bauen. Die Dachhimmelmontage ist vereinfacht. Solche Dachhimmel werden beim Fahrzeughersteller in der Regel in unterschiedlichen Farben, angepaßt an die übrige Innenverkleidung des Fahrzeuges, bereitgehalten. Die Auswahl des Dachhimmels erfolgt infolgedessen erst am Montageband des Fahrzeugherstellers, so daß solche Dachhimmel nicht zusammen mit den Funktionsteilen des Schiebehebedachs vormontiert werden können. Bei dem erfindungsgemäß ausgebildeten, ohne Transportbrücke auskommenden Schiebehebedach kann im Zuge der Dachmontage beim Kraftfahrzeughersteller der Dachhimmel einfach auf den hinteren Teil des Schiebedachrahmens lose aufgelegt und dann von hinten unter der Wasserrinne hindurchgeschoben werden.

Aus der DE-A 3 532 104 ist zwar ein Schiebehebedach bekannt, bei dem die Wasserrinne beidseits mit Führungsschlitten verbunden ist, die entlang den der Deckelführung dienenden Gleitbahnen verschiebbar geführt sind. Dabei ist die Wasserrinne jedoch an den Führungsschlitten starr angebracht, und die Wasserrinne kann beim Ausstellen des Deckels nicht gekippt werden.

Ein konstruktiv besonders einfacher Aufbau wird erhalten, wenn in weiterer Ausgestaltung der Erfindung die Wasserrinne mit den Führungsschlitten über Tragarme verbunden ist, die an der Wasserrinne starr angebracht sind, von der Wasserrinne nach hinten abstehen sowie im Bereich ihres von der Wasserrinne abliegenden Endes mit den Führungsschlitten für eine Schwenkbewegung um die Schwenkachse verbunden sind. Zweckmäßig liegt die Schwenkachse in vertikaler Richtung zwischen den Gleitbahnen und dem Boden der Wasserrinne. Die Führungsschlitten sind vorteilhaft an den Gleitbahnen über Gleitbacken ge führt, die auf die Führungsschlitten aufgesteckt sind. Jeder der Führungsschlitten kann einen dem Anlenken der Wasserrinne dienenden Schwenkzapfen tragen. Die Schwenkzapfen können jeweils in ein an dem betreffenden Tragarm angeformtes Schwenklager eingeclipst sein. Zu einer besonders flachen Dachbauweise trägt ferner bei, wenn in weiterer Ausgestaltung der Erfindung die Lage der Wasserrinnenschwenkachse und der Anlenkstellen der Schleppbügel an dem deckelfesten Punkt derart gewählt sind, daß beim Absenken des hinteren Deckelendes auch die Wasserrinne mindestens im Bereich ihres vorderen Randes gegenüber der Lage in der Deckelschließstellung abgesenkt wird.

Ein Ausführungsbeispiel der Erfindung ist im folgenden unter Bezugnahme auf die Zeichnung beschrieben. Es zeigt:

Fig. 1 eine auseinandergezogene perspektivische Ansicht der wesentlichen Komponenten eines Schiebehebedachs nach der Erfindung,

Fig. 2 in größerem Maßstab eine Teildraufsicht auf die eine Seite der verschiebbaren Wasserrinne und der ihr zuordneten Führung und Kippeinrichtung,

Fig. 3 den Schnitt entlang der Linie III-III der Fig. 2 sowie

Fign. 4, 5 und 6 Schnitte entlang der Linie IV-IV der Fig. 2 für drei verschiedene Stellungen des Deckels und der verschiebbaren Wasserrinne.

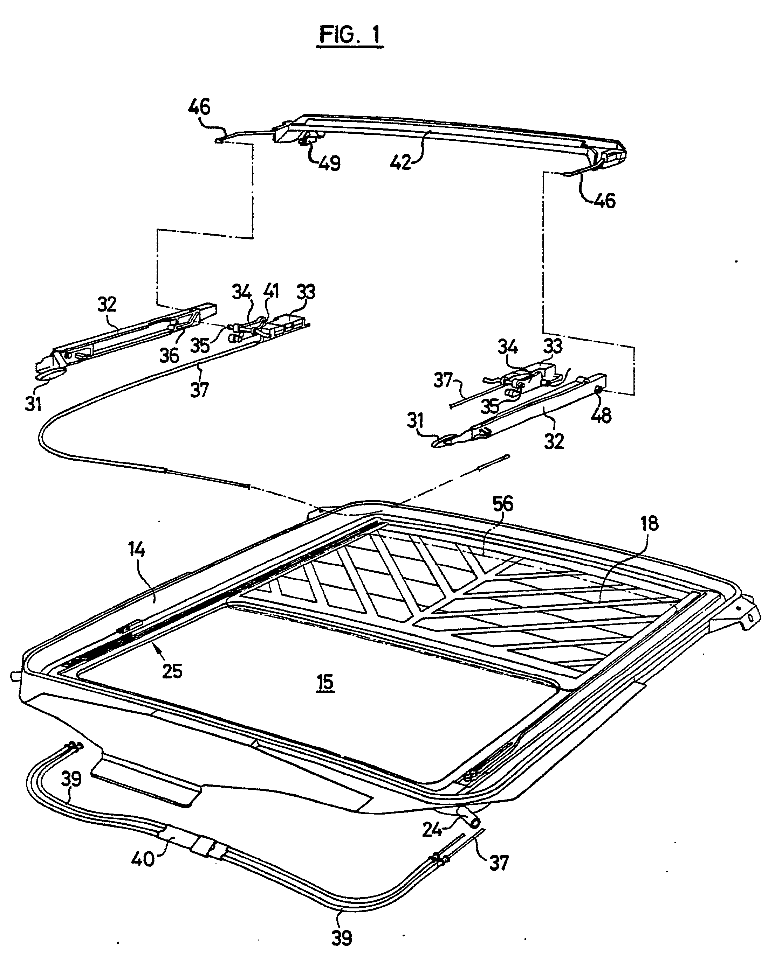

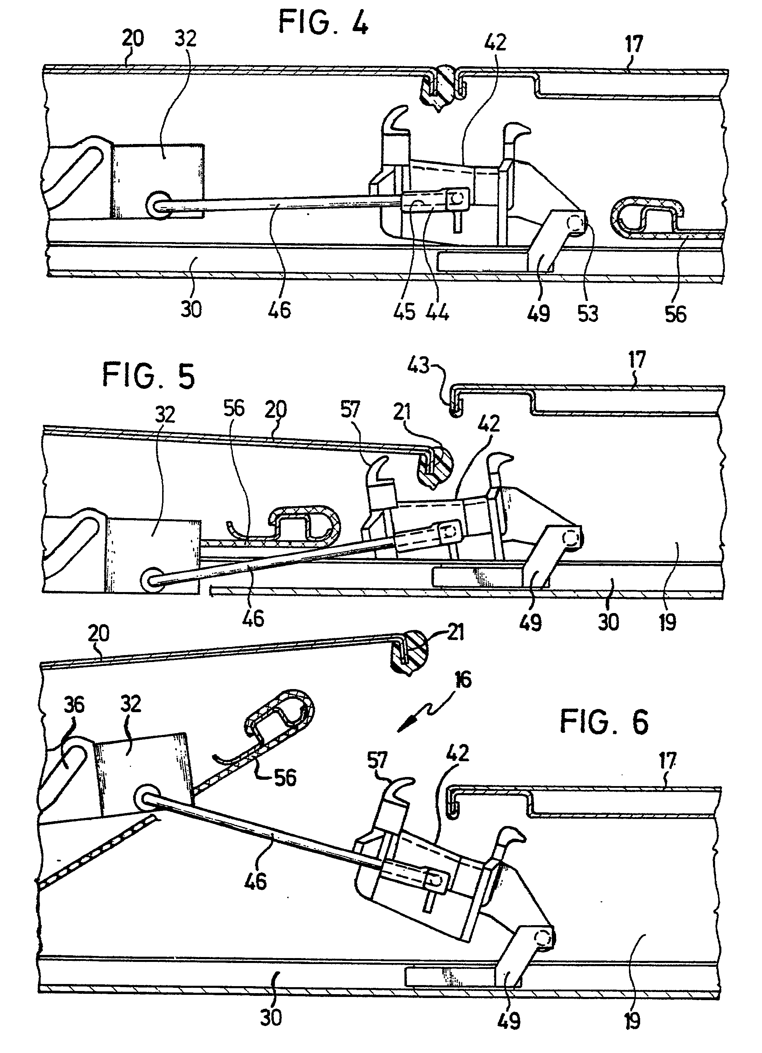

Entsprechend Fig. 1 weist das Schiebehebedach einen vorzugsweise aus einer Plattenpreßmasse (SMC) bestehenden einteiligen Rahmen 14 auf, der eine Rahmenöffnung 15 begrenzt, die nach Einbau des Rahmens 14 in einem Fahrzeug mit einer Dachöffnung 16 einer festen Dachfläche 17 (Fign. 4 bis 6) ausgerichtet ist. Der Rahmen 14 umschließt die Dachöffnung 16 vorne und an ihren Seiten, und er erstreckt sich mit seinem hinteren Teil 18 hinter der Dachöffnung 16 unter die feste Dachfläche 17 unter Bildung eines Raums 19. An dem Rahmen 14 ist ein starrer Deckel 20 abgestützt, mittels dessen die Dachöffnung 16 ver schlossen werden kann. Der Deckel 20 läßt sich mit seinem hinteren Ende 21 in der in Fig. 6 angedeuteten Weise über die feste Dachfläche 17 ausstellen oder nach Absenken des hinteren Endes 21 unter die feste Dachfläche 17 in den Raum 19 zurückschieben.

Der Rahmen 14 trägt an seiner Oberseite eine Dichtung 22, die bei der Montage des Rahmens von unten gegen die feste Dachfläche 17 angepreßt wird. An den die Dichtung 22 tragenden Teil des Rahmens schließt sich nach innen eine tiefer liegende Wasserrinne 23 an, in der Wasser aufgesammelt wird, das bei ausgestelltem oder zurückgeschobenem Deckel 20 einfällt. Solches Wasser wird in bekannter Weise über Ablaufrohre 24 abgeleitet, die in die Wasserrinne 23 einmünden. Die Wasserrinne 23 wird im Bereich der seitlichen Rahmenteile 25 von einer Rahmenerhöhung 26 begrenzt, die auf der der Wasserrinne 23 zugekehrten Seite eine gegen den Boden der Wasserrinne nach oben abgesetzte waagrechte Führungsfläche 27 und eine daran anschließende lotrechte Führungsfläche 28 aufweist. Die Führungsflächen 27 und 28 bilden zusammen mit einer auf die Rahmenerhöhung 26 aufgesetzten Abdeckschiene 29 auf beiden Seiten des Rahmens 14 jeweils eine Gleitbahn 30. Diese Gleitbahnen 30 verlaufen parallel zu den Seitenkanten der Dachöffnung 16. In den Gleitbahnen 30 sind vordere Gleitstücke 31 von Deckelträgern 32 in Fahrzeuglängsrichtung verschiebbar geführt. Auf den Deckelträgern 32 wird der Deckel 20 fest abgestützt. In den Gleitbahnen 30 laufen ferner gleitschuhartige Teile von hinteren Gleitstücken 33, an denen jeweils das eine Ende eines hebelförmigen Ausstellgliedes 34 angelenkt ist. Die Ausstellglieder 34 tragen an dem von der Anlenkstelle am Gleitstück 33 abliegenden Ende einen seitlich nach außen vorstehenden Kulissenstift 35, der in einem Kulissenschlitz 36 des Deckelträgers 32 verschiebbar geführt ist.

Jedes der hinteren Gleitstücke 33 ist mit dem einen Ende eines drucksteifen Antriebskabels 37 fest verbunden. Die Antriebskabel 37 reichen von den hinteren Gleitstücken 33 aus entlang den seitlichen Rahmenteilen 25 nach vorne. Sie sind dabei in einem Kabelkanal 38 des Rahmens 14 geführt. Nahe dem vorderen Ende der seitlichen Rahmenteile 25 treten die Antriebskabel 37 in ein Führungsrohr 39 ein, und die Antriebskabel 37 stehen bei 40 mit einem nicht näher veranschaulichten Antrieb in Verbindung, wie dies beispielsweise im ein zelnen aus der DE-A 3 532 104 bekannt ist. Im Zuge der Verschiebebewegung der hinteren Gleitstücke 33 kommt eine Kulissenführung 41 der Ausstellglieder 34 mit einem rahmenfest angeordneten Kulissenstift in Eingriff, wodurch die Ausstellglieder 34 verschwenkt werden, wie dies im einzelnen aus der DE-A 3 532 104 und der DE-C 2 914 855 bekannt ist. Die Schwenkbewegung der Ausstellglieder 34 führt zu einer Schwenkbewegung der Deckelträger 32 um eine von den vorderen Gleitstücken 31 bestimmte Achse, wobei die vorderen Gleitstücke 31 elastisch verformt werden.

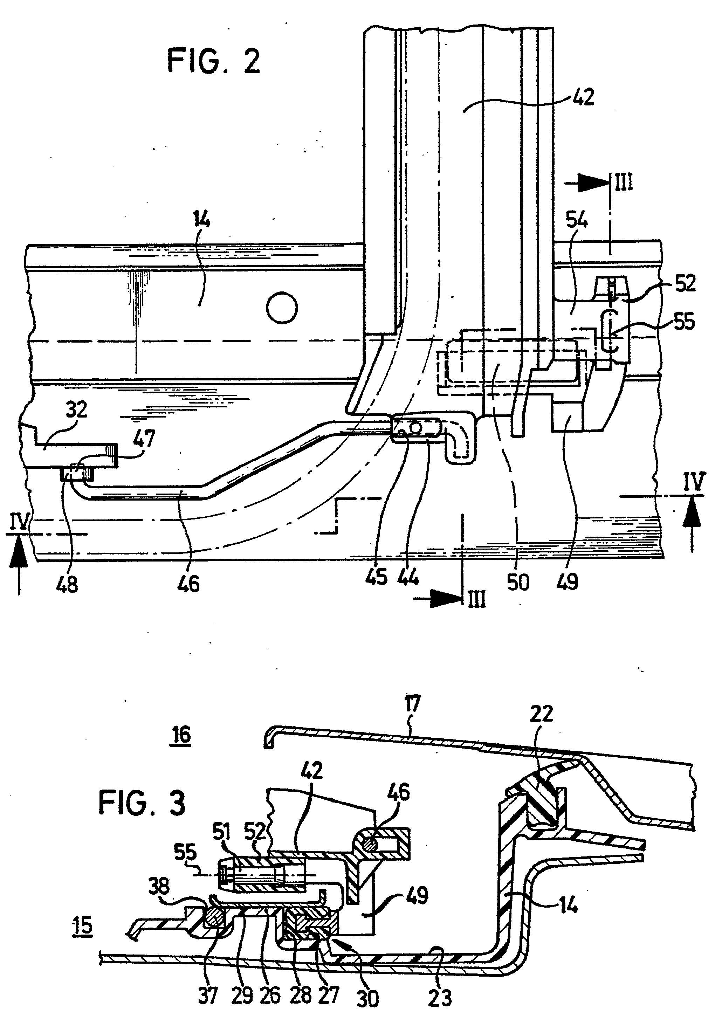

Ferner ist eine die Verschiebebewegungen des Deckels 20 mitmachende Wasserrinne 42 vorgesehen, welche die hintere Kante 43 der Dachöffnung 16 untergreift, solange sich der Deckel 20 in seiner vorderen Endstellung (Fign. 4 bis 6) befindet. An beiden Seiten der Wasserrinne 42 sitzt ein Aufnahmeteil 44 mit einem längsgerichteten, sich nach vorne öffnenden Aufnahmekanal 45, in den ein Schleppbügel 46 mit seinem hinteren Ende eingesteckt ist, um auf diese Weise für eine starre Verbindung zwischen Schleppbügel und Wasserrinne 42 zu sorgen. Die Schleppbügel 46 sind an ihrem vorderen Ende nach innen abgewinkelt. Das abgewinkelte Schleppbügelende 47 ist in einer Lagerhülse 48 drehbar gelagert, die an dem Deckelträger 32 nahe dessen hinterem Ende angeformt ist. Die Lagerhülsen 48 stellen deckelfeste Anlenkpunkte dar, welche dem hinteren Ende 21 des Deckels 20 näher liegen als dem vorderen Deckelende. Entlang den seitlichen Gleitbahnen 30 sind hinter den hinteren Gleitstücken 33 laufende Führungsschlitten 49 verschiebbar geführt. Für diesen Zweck ist auf jedem der beiden Führungsschlitten 49 ein vorzugsweise elastischer Gleitbacken 50 aufgesteckt, der in die Gleitbahn 30 eingreift. Jeder der Führungsschlitten 49 trägt einen nach innen vorstehenden Schwenkzapfen 51. Die Schwenkzapfen 51 sind jeweils in ein Schwenklager 52 eingesetzt, vorzugsweise eingeclipst, das am hinteren Ende von Tragarmen 54 angeformt ist. Die Tragarme 54 sind mit der Wasserrinne 42 starr, vorzugsweise einstückig, verbunden und stehen von der Wasserrinne nach hinten ab (Fig. 2). Die Schwenkzapfen 51 und die damit zusammenwirkenden Schwenklager 52 bestimmen für die Wasserrinne 42 eine Schwenkachse 55, die in Abstand hinter der Wasserrinne 42 liegt und die gegenüber den Gleitbahnen 30 eine fest vorgegebene, in Abstand über den Gleitbahnen liegende Höhenlage hat. Wie insbesondere aus Fig. 3 hervorgeht, liegt die Schwenkachse 55 in vertikaler Richtung zwischen den Gleitbahnen 30 und dem Boden der Wasserrinne 42. Der Abstand der Schwenkachse 55 von der Wasserrinne 42 in Deckelverschieberichtung und der Abstand der Schwenkachse 55 von der Gleitbahn 30 in lotrechter Richtung sowie die Anlenkstellen der Schleppbügel 46 an den Deckelträgern 32 sind so gewählt, daß bei der Dachmontage ein auf den hinteren Teil 18 des Rahmens 14 lose aufgelegter Dachhimmel 56 selbst bei geringer Dachbauhöhe unter der Wasserrinne 42 durchgeschoben werden kann. Der Dachhimmel 56 wird dann mit dem Deckel 20 in nicht näher dargestellter Weise verbunden. Einzelheiten einer vorliegend geeigneten Verbindung zwischen Dachhimmel 56 und Deckel 20 ergeben sich aus der DE-A 3 532 083. Des weiteren ist dafür gesorgt, daß beim Absenken des hinteren Deckelendes 21 (Fig. 5) auch die Wasserrinne 42 mindestens im Bereich ihres vorderen Randes 57 gegenüber der Lage in der Deckelschließstellung (Fig.4) um ein gewisses Maß abgesenkt wird, um ohne Vergrößerung der Dachbauhöhe zusätzlichen Raum für das Zurückschieben des Deckels 20 unter die feste Dachfläche 17 zu gewinnen. Beim Ausstellen des Deckels 20 (Fig. 6) wird die Wasserrinne 42 über die Schleppbügel 46 um die Schwenkachse 55 so weit verschwenkt, daß der vordere Rand 57 der Wasserrinne 42 über den hinteren Rand der Dachöffnung 16 angehoben wird, so daß gegebenenfalls auf der festen Dachfläche 17 stehendes Regen- oder Waschwasser von der Wasserrinne 42 aufgefangen wird, wenn das Fahrzeug plötzlich abgebremst wird.

**Patentansprüche**

1. Schiebehebedach für Fahrzeuge mit einem in seiner Schließstellung eine Dachöffnung (16) in einer festen Dachfläche (17) verschließenden, starren Deckel (20), der an parallel zu den Seitenkanten der Dachöffnung (16) verlaufenden Gleitbahnen (30) geführt und wahlweise mit seinem hinteren Ende (21) über die feste Dachfläche (17) ausstellbar oder nach Absenken seines hinteren Endes (21) nach hinten unter die feste Dachfläche (17) verschiebbar ist, und mit einer die Verschiebebewegungen des Deckels (20) mitmachenden Wasserrinne (42), die bei ausgestelltem und geschlossenem Deckel (20) die hintere Kante (43) der Dachöffnung (16) untergreift und die mit einer Kippeinrichtung verbunden ist, die beim Ausstellen des Deckels die Wasserrinne (42) in eine Schräglage bringt, in welcher der vordere Rand (57) der Wasserrinne (42) angehoben ist, wobei die Kippeinrichtung zu beiden Seiten der Dachöffnung (16) angeordnete Schleppbüge (46) aufweist, die im Bereich ihres hinteren Endes mit der Wasserrinne (42) starr (44, 45) verbunden und im Bereich ihres vorderen Endes an einem deckelfesten Punkt (32, 48) angelenkt sind, welcher dem hinteren Ende (21) des Deckels (20) näher liegt als dem vorderen Deckelende, **dadurch gekennzeichnet,** daß die Wasserrinne (42) beidseits an je einen Führungsschlitten (49) angelenkt ist, daß die Führungsschlitten gleichfalls entlang den Gleitbahnen (30) verschiebbar geführt sind und für die Wasserrinne eine Schwenkachse (55) bestimmen, die in Abstand hinter der Wasserrinne liegt und die gegenüber den Gleitbahnen eine fest vorgegebene, in Abstand über den Gleitbahnen liegende Höhenlage hat, sowie daß die Lage der Wasserrinnenschwenkachse (55) und der Anlenkstellen der Schleppbügel (46) an dem deckelfesten Punkt (Lagerhülse 48) derart gewählt ist, daß bei der Dachmontage ein mit dem Deckel (20) zu verbindender Dachhimmel (56) von hinten unter der Wasserrinne hindurchgeschoben werden kann.

2. Schiebehebedach nach Anspruch 1, dadurch gekennzeichnet, daß die Wasserrinne (42) mit den Führungsschlitten (49) über Tragarme (54) verbunden ist, die an der Wasserrinne starr angebracht sind, von der Wasserrinne nach hinten abstehen sowie im Bereich ihres von der Wasserrinne abliegenden Endes (53) mit den Führungsschlitten für eine Schwenkbewegung um die Schwenkachse (55) verbunden sind.

3. Schiebehebedach nach einem der vorhergehenden Ansprüche, dadurch gekennzeichnet, daß die Schwenkachse (55) in vertikaler Richtung zwischen den Gleitbahnen (30) und dem Boden der Wasserrinne (42) liegt.

4. Schiebehebedach nach einem der vorhergehenden Ansprüche, dadurch gekennzeichnet, daß die Führungsschlitten (49) an den Gleitbahnen (30) über Gleitbacken (50) geführt sind, die auf die Führungsschlitten aufgesteckt sind.

5. Schiebehebedach nach einem der vorhergehenden Ansprüche, dadurch gekennzeichnet, daß jeder der Führungsschlitten (49) einen dem Anlenken der Wasserrinne (42) dienenden Schwenkzapfen (51) trägt.

6. Schiebehebedach nach Ansprüchen 2 und 5, dadurch gekennzeichnet, daß die Schwenkzapfen (51) jeweils in ein an dem betreffenden Tragarm (54) angeformtes Schwenklager (52) eingeclipst sind.

7. Schiebehebedach nach einem der vorhergehenden Ansprüche, dadurch gekennzeichnet, daß die Lage der Wasserrinnenschwenkachse (55) und der Anlenkstellen der Schleppbügel (46) an dem deckelfesten Punkt (Lagerhülse 48) derart gewählt sind, daß beim Absenken des hinteren Deckelendes (21) auch die Wasserrinne (42) mindestens im Bereich ihres vorderen Randes (57) gegenüber der Lage in der Deckelschließstellung abgesenkt wird.

**Claims**

1. Sliding and lifting roof for vehicles with a rigid cover (20) closing a roof opening (16) in a fixed roof surface (17) when in its closed position and which is guided on slideways (30) running parallel to the lateral edges of the roof opening (16) and which, if desired, can be tiltably raised so that its rear end (21) is over the fixed roof surface (17) or, after lowering its rear end (21), is rearwardly displaceable below the fixed roof surface (17), and with a water gutter (42) which also carries out the displacement movements of the cover (20) and which engages below the rear edge (43) of the roof opening when the cover (20) is in the raised and closed position and which is connected to a tilting device, which on raising the cover brings the water gutter (42) into a sloping position, in which the leading edge (57) of said water gutter (42) is raised, the tilting device having control levers (46) arranged on either side of the roof opening (16) and which in the vicinity of its rear end are rigidly connected (44, 45) to the water gutter (42) and in the vicinity of its front end to a cover-fixed point (32, 48), which is closer to the rear end (21) of the ccrver (20) than to its front end, characterized in that cn either side the water gutter (42) is articulated on a slide, that the slides (49) are also displaceably guided along the slideways (30) and define for the water gutter a pivot axis (55), which is at a distance behind the water gutter and with respect to the slideways has a predetermined vertical position located above the slideways and in that the position of the water gutter pivot axis (55) and the articulation points of the ccntrol levers (46) to the coverfixed point (48) are chosen in such a way that during roof installation a roof lining (56) to be connected to the cover (20) can be slid from the rear beneath the water gutter.

2. Sliding and lifting roof according to claim 1, characterized in that the water gutter (42) is connected to the slides (49) by means of support arms (54) which are rigidly fitted to the water gutter, project rearwards from the latter and in the vicinity of the end (53) thereof remote from the gutter are connected to the slides for a pivoting movement about pivot axis (55).

3. Sliding and lifting roof according to one of the preceding claims, characterized in that the pivot axis (55) is vertically located between the slideways (30) and the bottom of the water gutter (42).

4. Sliding and lifting roof according to one of the preceding claims, characterized in that the slides (49) are guided on slideways (30) by means or sliding blocks (50), which are mounted on the slides.

5. Sliding and lifting roof according to one of the preceding claims, characterized in that each of the slides (49) carries a trunnion (51) used for the articulation of the water gutter (42).

6. Sliding and lifting roof according to claims 2 and 5, characterized in that the trunnions (51) are in each case clipped into a pivot bearing (52) shaped onto the particular support arm (54).

7. Sliding and lifting roof according to one of the preceding claims, characterized in that the position of the water gutter pivot axis (55) and the articulation points of the control levers (46) on the coverfixed point (bearing sleeve 48), is chosen in such a way that an lowering the rear cover end (21), at least in the vicinity of its front edge (57) the water gutter (42) is also lowered with respect to the position when the cover is closed.

## Revendications

1. Toit ouvrant relevable pour véhicules automobiles qui comprend un couvercle rigide (20) formant en sa position de fermeture une ouverture du toit (12) aménagée dans une surface de toit fixe (17), lequel est guidé sur des glissières (30) s'étendant parallèlement aux arêtes latérales de l'ouverture du toit (16), et peut, à volonté, être mis en place par l'intermédiaire de la surface fixe du toit (17) ou être déplacé, après abaissement de son extrémité arrière (21) vers l'arrière au dessous de la surface fixe du toit, avec une rigole à eau (42) participant aux mouvements de déplacement du couvercle (20), qui, étant mis en place et fermé, saisit l'arête inférieure (13) de l'ouverture de toit et est reliée à un dispositif de basculement, qui, lors de la mise en place du couvercle, amène la rigole à eau dans une position inclinée, dans laquelle le bord avant (57) de la rigole à eau est soulevé, tandis que le dispositif de basculement présente des traverses d'entraînement (46) disposées des deux côtés de l'ouverture du toit (16) qui, sont reliées rigidement à la rigole à eau (42) dans la région de leur extrémité arrière (44, 45) et sont articulées dans la région de leur extrémité avant en un point fixe sur le couvercle (32, 48), qui est plus proche de l'extrémité arrière (21) du couvercle (20) que de l'extrémité avant de celui-ci, caractérisé en ce que:
la rigole à eau (42) est articulée sur chacun des deux côtés sur un coulisseau de guidage (49), en ce que ces coulisseaux sont guidés mobiles de la même manière le long des glissières (30) et déterminent pour la rigole à eau un axe de pivotement (55), qui se trouve à une certaine distance derrière la rigole et a, par rapport aux glissières, une position en hauteur fixée d'avance, à quelque distance au-dessus des glissières et en ce que la position de l'axe de pivotement (55) de la rigole à eau et des points d'articulation des traverses d'entraînement (46) sur le pont fixe du couvercle (manchon d'appui 48) est choisi de manière telle que, lors du montage du toit, un ciel de toit (56) à assembler avec le couvercle (20) peut être introduit par l'arrière sous la rigole à eau.

2. Toit ouvrant relevable selon la revendication 1, caractérisé en ce que la rigole à eau (42) est reliée aux coulisseaux de guidage (49) par des bras d'appui (54) qui sont fixés rigidement sur la rigole, s'écartant de celle-ci vers l'arrière et qui sont reliés dans la région de leur extrémité (53) éloignés de la rigole aux coulisseaux pour l'exécution d'un mouvement de pivotement sur l'axe de pivotement (55).

3. Toit ouvrant relevable selon l'une des revendications qui précédent, caractérisé en ce que l'axe de pivotement (55) est orienté suivant la direction verticale entre les glissières (30) et le fond de la rigole à eau (42).

4. Toit ouvrant relevable selon l'une des revendications qui précédent, caractérisé en ce que les coulisseaux de guidage (49) sont guidés par les glissières (30) au moyen de blocs coulissants (50), rapportés sur les coulisseaux.

5. Toit ouvrant relevable selon l'une des revendications qui précédent, caractérisé en ce que chacun des coulisseaux porte un tenon de pivotement (51) servant à l'articulation de la rigole à eau (42).

6. Toit ouvrant relevable selon les revendications 2 et 5, caractérisé en ce que les tenons de pivotements (51) sont respectivement engagés dans un palier de pivotement (52) aménagé sur le bras d'appui correspondant.

7. Toit ouvrant relevable selon l'une des revendications qui précédent, caractérisé en ce que la position de l'axe de pivotment de la rigole (55) et des points d'articulation des traverses d'entraînement (46) est choisie sur le point fixe du couvercle (manchon d'appui 48) de telle sorte que, lors de l'abaissement de l'extrémité arrière du couvercle (21), la rigole à eau est abaissée, du moins dans la région de son bord avant (57), par rapport à sa position en position de fermeture du couvercle.

## FIG. 1

# FIG. 2

# FIG. 3

# FIG. 4

# FIG. 5

# FIG. 6